# EUROPÄISCHE PATENTSCHRIFT

(11) **EP 1 591 392 B1**
(45) Veröffentlichungstag und Bekanntmachung des Hinweises auf die Patenterteilung: **03.11.2010**
(21) Anmeldenummer: 04007324.9
(22) Anmeldetag: 26.03.2004
(51) Int. Cl.: B65H 23/025, B65H 27/00

(54) **Breitstreckwalzenanordnung für eine faltenfreie Führung von Bändern**
Spreading roller arrangement for guiding webs without wrinkles
Aménagement de rouleaux élargisseurs pour un guidage de bandes sans plis

(43) Veröffentlichungstag der Anmeldung: 02.11.2005
(73) Patentinhaber: Applied Materials GmbH & Co. KG, 63755 Alzenau (DE)
(72) Erfinder: Hein, Stefan, 63825 Blankenbach (DE); Klemm, Günter, 63667 Nidda (DE); Klein, Wolfgang, 63939 Wörth (DE)
(74) Vertreter: Zimmermann & Partner

(56) Entgegenhaltungen:
- EP-A- 0 829 654
- DE-A- 3 613 494
- US-A- 2 925 640
- US-A- 5 226 870

## Beschreibung

Die Erfindung betrifft eine Breitstreckwalzenanordnung nach dem Oberbegriff des Patentanspruchs 1.

Zum besseren Verständnis des Standes der Technik und der Erfindung sei darauf verwiesen, dass die Mantelflächen von Umdrehungskörpern, seien es zylindrische, kegelförmige oder anders geformte Umdrehungskörper, stets eine unendliche Zahl von Mantellinien aufweisen. Bei den nachstehend herausgegriffenen linearen Mantellinien M1 und M2, handelt es sich um herausgegriffene definierte Positionen der Mantellinien, die auf einer gemeinsamen Geraden liegen, miteinander fluchten und bei der Rotation nacheinander von allen Mantellininen durchlaufen werden.

Durch die US 3 666 049 ist eine Breitstreckwalze für Bänder bekannt, bei der auf einem stationären Rohrbogen mittels Wälzlagern eine Reihe von axial beabstandeten zylindrischen Hülsen gelagert ist. Diese sind wiederum von einem flexiblen Schlauch umgeben, der auch die Abdichtung zwischen den Hülsen bewirkt. Durch die Krümmung des Rohrbogens hat jede der Hülsen ihre eigene Rotationsachse. Dies hat zur Folge, dass sich, bezogen auf feste Bezugspunkte der Hülsen, deren Abstände sich beim Umlauf periodisch ändern, so dass sich eine beträchtliche Walkarbeit innerhalb des Schlauches ergibt, der auch zu örtlichen Verschiebungen auf den Hülsen unter Bildung von Reibungskräften neigt. Da der Antrieb der Walze durch das jeweilige Band erfolgt, treten an diesem erhebliche Zugspannungen auf, so dass die Anwendung - wie angegeben - auf zugfeste Bänder aus Textilien, Filz und dergleichen beschränkt ist. Alle Oberflächenelemente des Schlauches rotieren mit der gleichen Drehzahl, so dass es beim Breitstrecken zu Kräfte verzehrenden Umfangs- und Längsverschiebungen von Teilen des Bandes auf der Walze kommen muss. Die Schrift beschäftigt sich auch im wesentlichen mit der Schmierung der Lager durch Ölnebel, der in die Zwischenräume zwischen den Lagern eingedüst wird. Die Einzelteile und deren Montage sind jedoch aufwendig, und zum Zwecke einer Zerlegung und Wartung muss der Schlauch abgezogen werden.

Durch die DE 27 25 331 C2 ist eine ähnliche bananenförmige Breitstreckwalze für Bänder bekannt, die wahlweise mit oder ohne einen Mantel aus Gummi oder Kunststoff ausgeführt sein kann. Jede der Hülsen ist nur an einem Ende mittels eines Wälzlagers auf dem Rohrbogen gelagert und mit dem anderen Ende mit der jeweils benachbarten Hülse über eine elastische Muffe verbunden, so dass alle Hülsen mit der gleichen Drehzahl und Umfangsgeschwindigkeit rotieren. Auch diese Schrift beschäftigt sich im wesentlichen mit der Schmierung der Lager durch Ölnebel, der in die Zwischenräume zwischen den Lagern eingedüst wird. Die Einzelteile und deren Montage sind jedoch aufwendig, und zum Zwecke einer Zerlegung und Wartung müssen ggf. der Mantel abgezogen und die Hülsen von den elastischen Muffen getrennt werden,

Durch die DE 36 13 494 A1 ist eine ähnliche bananenförmige Breitstreckwalze für Bänder bekannt, bei der es jedoch darum geht, die Temperaturen der Wälzlager zu überwachen.

Durch die DE 37 33 448 A1 ist eine ähnliche bananenförmige Breitstreckwalze für Bänder bekannt, wobei es darum geht, die Wälzlager der einzelnen Hülsen über Zu- und Abfuhrleitungen ständig mit Fett zu schmieren. Mit dem Nachfetten solcher Walzen befasst sich auch die DE 39 19 415 C2.

Der Hauptnachteile aller "Bananenwalzen" sind die, dass die gesamte Oberfläche, sei es ein Schlauch oder Mantel aus elastomeren Werkstoffen, seien es zylindrische Hülsen in Form von metallischen Abschnitten von Rohren, an keiner Stelle eine gerade Mantellinie enthält oder bildet, und zwar weder auf der Auflaufseite noch auf der Ablaufseite des Bandes. Ferner nimmt die Schrägstellung der Mäntel oder Hülsen in Richtung auf die beiden Enden der Breitstreckwalze zu, so dass die Gefahr einer überdehnung der Bandkanten besteht, die nicht mehr rückgängig zu machen ist.

Durch die EP 0 470 331 B1 sind u. a. zur Vereinfachung der Fertigung und Montage zwei alternative Breitstreckwalzen bekannt, von denen die eine einen bogenförmigen Träger für Hülsen bzw. Aussenbuchsen und die andere einen geradlinigen Träger hierfür besitzt. Bei dem bogenförmigen Träger sind die Wälzlager unmittelbar auf diesem gelagert, bei dem geradlinigen Träger unter Zwischenschaltung von Innenbuchsen mit Zylinder-Fortsätzen, deren Aussenflächen unter einem spitzen Winkel zur Trägerachse stehen. Dabei kann zwar bei gleichgerichteter Winkelstellung aller Innenbuchsen an zwei Stellen eine geradlinige Mantellinie erzeugt werden, quer hierzu betrachtet entsteht jedoch ein sägezahnähnliches Oberflächenprofil, dem sich das Band anschmiegt. Dadurch werden bei empfindlichem Bahnmaterial Spuren hinterlassen, die auch durch die Breitstreckung nicht mehr ausgeglichen werden können.

Durch die EP 0 527 291 B1 ist eine Breitstreckwalze mit geradlinigem Träger bekannt, auf dem mehrere scheibenförmige Buchsen oder Walzen mit zylindrischen Umfangsflächen angeordnet sind. Lediglich die mittlere dieser Walzen steht genau senkrecht zur Achse des Trägers, alle anderen sind unter einem spitzen Winkel hierzu gruppenweise spiegelsymmetrisch einstellbar. Der Aufbau und die Montage sind jedoch wegen der zahlreichen Schwenkachsen und der zugehörigen Verstellmechanismen aufwendig.

Durch die gattungsgemässe DE 199 01 089 A1 ist es bekannt, eine Breitstreckanordnung für Bänder aus zwei Kegelstümpfen auszubilden, deren kleinste Durchmesser aufeinander zu gerichtet sind und von denen jeweils eine Mantellinie mit der des anderen Kegelstumpfes fluchtet. Beim Auflaufen der Ränder des Bandes auf die dickeren Enden der Kegelstümpfe wird dieses gestreckt, und von diesen Mantellinien wird das Band in tangentialer Richtung abgezogen. Nun haben solche Kegelstümpfe zwar auf ihrer gesamten Länge die gleiche Drehzahl bzw. Winkelgeschwindigkeit, nicht aber die gleich Umfangsgeschwindigkeit, so dass das Band mit Ausnahme seiner Ränder schleifend bzw. mit Schlupf von den Mantellinien der Kegelstümpfe abgezogen wird. Diese Geschwindigkeitsdifferenzen führen beim Abzug empfindlicher Bahnen, wie beispielsweise bei dünnen Kunststoff-Folien, zur Ausbildung von Kratzern, die nicht mehr zu beseitigen sind. Ein weiterer Nachteil ist der, dass die aufeinander zu gerichteten Enden der Tragkörper einen erheblichen Abstand voneinander haben, d.h., nicht miteinander verbunden sind, was die Stabilität der Raumform und die Führungseigenschaften negativ beeinflusst.

Durch die EP 0 829 654 A2 ist es bei einer Breitstreckwalze bekannt, auf einer kontinuierlich gebogenen Achse zwei Gruppen von kegelstumpfförmigen Walzen anzuordnen. Die kleineren Durchmesser der Walzen sind der Mitte und deren grössere Durchmesser - von der Mitte ausgehend - den Aussenseiten zugewandt.

Die US 2 925 640 offenbart eine durchgehende, frei tragende und nur in der Mitte kantig gebogene Achse, deren geradlinige Schenkel von einem Mittelstück ausgehen. Auf jedem dieser Schenkel ist eine kegelstumpfförmige Walze gelagert. Zwischen den beiden Kegelstümpfen ist ein keilförmiger stationärer Ring angeordnet, der mittels einer Stütze auf einem Träger befestigt ist und dessen oberste Mantellinie in Reihe mit den benachbarten Mantellinien der Kegelstümpfe fluchtet.

Der Erfindung liegt daher die Aufgabe zugrunde, eine Breitstreckwalzenanordnung der eingangs beschriebenen Gattung dahingehend zu verbessern, dass die besagte Geschwindigkeitsdifferenz beim Abzug der Bänder trotz einfachster Ausbildung der Breitstreckwalzenanordnung kleinstmöglich ist, dass die Ausbildung von Kratzern auf den Bändern unterbleibt, zumindest aber vernachlässigbar ist und dass die Führungsgenauigkeit und die Leichtgängigkeit verbessert werden.

Die Lösung der gestellten Aufgabe erfolgt bei der eingangs angegebenen Breitstreckwalzenanordnung erfindungsgemäss durch die Merkmale im Kennzeichen des Patentanspruchs 1.

Durch diese konstruktiven Massnahmen wird die gestellte Aufgabe in vollem Umfange gelöst, d.h. die besagte Geschwindigkeitsdifferenz beim Abzug der Bänder ist trotz einfachster Ausbildung der Breitstreckwalzenanordnung kleinstmöglich, die Ausbildung von Kratzern auf den Bändern unterbleibt, ist zumindest aber vernachlässigbar, und die Führungsgenauigkeit und die Leichtgängigkeit werden verbessert. Insbesondere wird einer anfänglichen Neigung zur Faltenbildung, die sich durch einen kompletten Wickel "hindurchschleppen" kann, erfolgreich entgegen gewirkt. Die ist bei dünnen Bändern z. B. in Form von Kunststoff-Folien von besonderer Bedeutung.

Die Breitstreckwalzenanordnung ist in aller Regel mindestens einer Behandlungs- bzw. Beschichtungsstation vorgeschaltet, insbesondere einer Beschichtungswalze, die das Band bzw. die Bänder durch die mindestens eine Behandlungs- bzw. Beschichtungsstation hindurch transportiert.

Es ist dabei im Zuge weiterer Ausgestaltungen der Erfindung besonders vorteilhaft, wenn - entweder einzeln oder im Kombination - :
* die geschlossene Kammer eine Vakuumkammer mit mindestens einer Behandlungsstation für die Bänder ist, insbesondere, wenn die Behandlungsstation eine Beschichtungsstation für die Bänder ist,
* jede Gruppe von Walzenabschnitten aus mindestens vier Walzenabschnitten besteht,
* die Stützkörper mit Längsbohrungen und radialen Bohrungen versehen sind, durch die ein ölhaltiges Gas zwischen jeweils zwei Wälzlagern einleitbar ist,
* die Stützkörper als Hohlzylinder ausgeführt sind,
* die beiden Stützkörper im Bereich der Mittenebene durch ein Kupplungsteil miteinander verbunden sind,
* das Kupplungsteil einen Ringflansch mit zwei ebenen Seitenflächen besitzt, die unter einem spitzen Winkel zueinander stehen und von denen zwei Gewindestutzen in Normalenrichtung abstehen, auf die die Stützkörper aufgeschraubt sind,
* das Kupplungsteil eine Durchgangsbohrung für die Verbindung der Längsbohrungen in den Stützkörpern besitzt,
* die Bohrungen in den Stützkörpern an eine Schmierstoffquelle angeschlossen sind, durch die dem zugeführten Gas ein Schmierstoff beifügbar ist,
* die Oberflächen der beiderseits der Mittenebene angeordneten Gruppen von Walzenabschnitten jeweils in einer gemeinsamen Kegelstumpffläche liegen,
* die Oberflächen der einzelnen Walzenabschnitte aus einem Leichtmetall bestehen,
* die Oberflächen der einzelnen Walzenabschnitte auf dem Umfang und in Achsrichtung einen Abstand von 0,05 bis 1 mm haben,
* die Achsen der Stützkörper unter einem Winkel von 0,1 bis 2 Grad zueinander ausgerichtet sind,
* die Wälzlager durch Distanzringe in einem vorgegebenen Abstand gehalten sind und wenn die Walzenabschnitte durch Innenflansche zwischen den Aussenringen jeweils zweier Wälzlager auf Distanz gehalten sind, und/oder, wenn
* die Breitstreckwalzenanordnung zwischen zwei parallelen Kammerwänden gehalten ist.

Die Erfindung betrifft auch ein Verfahren zum Betrieb von Bandbehandlungsanlagen, die unter Vakuum betrieben werden und in einer Vakuumkammer Führungswalzen mit Wälzlagern besitzen, die in einem Zwischenraum auf Lagerträgern gehalten sind.

Zur Verhinderung von Verschmutzungen innerhalb der Führungwalzen und ihrer Lager wird vorgeschlagen, dass vor dem Fluten der Vakuumkammer in den Zwischenraum bzw. die Zwischenräume ein Gas eingeleitet wird, durch das Festkörper aus der Gruppe Staub und Partikel aus dem Zwischenraum herausgeblasen werden und das Eindringen von Festkörpern in den Zwischenraum verhindert wird.

Sofern die Wälzlager Innenringe und Aussenringe besitzen, ist es besonders vorteilhaft, wenn dass das Gas durch die Ringspalte zwischen den Innenringen und den Aussenringen hindurch geblasen wird, insbesondere, wenn das Gas während des gesamten Flutvorganges der Vakuumkammer durch das Walzeninnere zugeführt wird.

Ein Ausführungsbeispiel des Erfindungsgegenstandes, seine Wirkungsweise und Vorteile werden nachfolgend anhand der Figuren 1 bis 3 näher erläutert.

Es zeigen:
- Figur 1: einen Axialschnitt durch eine Breitstreckwalzenanordnung, die zwischen zwei Seitenwänden einer Vakuumkammer angeordnet ist,
- Figur 2: den Ausschnitt aus dem Rahmen II in Figur 1 in stark vergrössertem Massstab und,
- Figur 3: verschiedene Möglichkeiten einer Bandführung über die Breitstreckwalzenanordnung nach den Figuren 1 und 2.

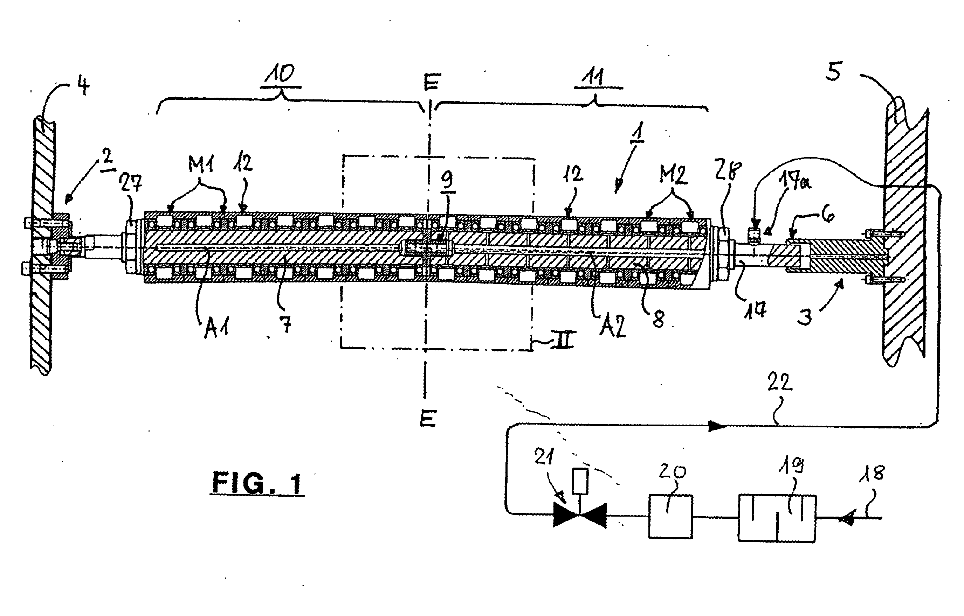

In Figur 1 ist eine Breitstreckwalzenanordnung 1 dargestellt, die mittels zweier Halterungen 2 und 3 an den Innenseiten zweier paralleler senkrechter Kammerwände 4 und 5 einer sonst nicht weiter dargestellten Vakuumkammer gehalten ist. Ein Lageausgleich, der durch Temperaturänderungen der Walzenanordnung und/oder Druckänderungen an den Kammerwänden 4 und 5 eintreten kann, wird über eine Schiebeführung 6 ausgeglichen.

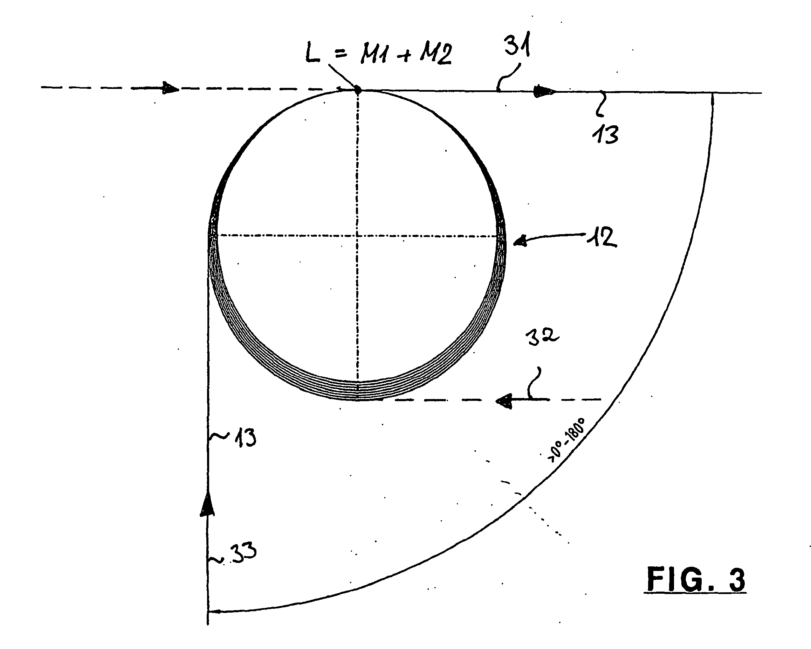

Die Breitstreckwalzenanordnung 1 besitzt zwei rohrförmige Stützkörper 7 und 8, die an ihren wandungsfernen Enden in einer Mittenebene E-E durch ein Kupplungsteil 9 lagefest miteinander verbunden sind. Auf diesen Stützkörpern 7 und 8 sind zwei Gruppen 10 und 11 von jeweils sieben Walzenabschnitten 12 mit rotationssymmetrischen Oberflächen 12a gelagert, die als Kreis-Kegelstumpfflächen ausgebildet sind und stufenlos aneinander gereiht sind. Die jeweils kleineren Umfangskreise der Deckflächen sind bei jeder Gruppe 10 bzw. 11 auf die Mittenebene E-E ausgerichtet, die jeweils grösseren Umfangskreise der Basisflächen sind bei jeder Gruppe 10 bzw. 11 auf die Kammerwände 4 bzw. 5 ausgerichtet. Die in Figur 1 obersten Mantellinien M1 und M2 fluchten linear und bilden eine gemeinsame Abzugslinie L für ein Band 13 (siehe Figur 3). Dies setzt voraus daß die Achsen A1 und A2 beider Gruppen 10 und 11 in einem spitzen Winkel von beispielhaft 0,8 Grad zueinander stehen.

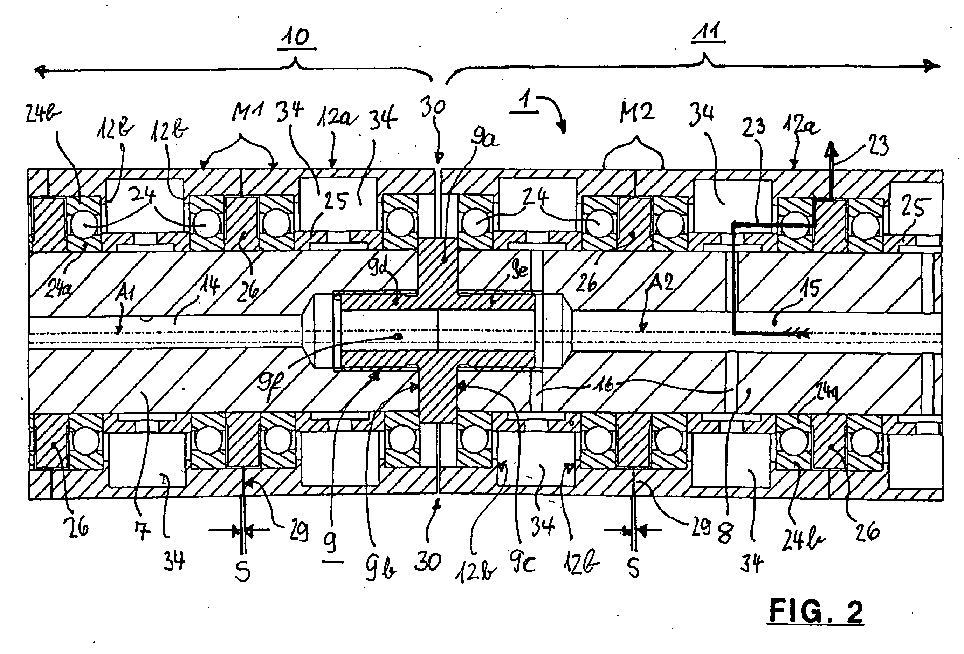

Die Stützkörper 7 und 8 besitzen konzentrische Längsbohrungen 14 bzw. 15, von denen radiale Bohrungen 16 zu den einzelnen Wälzlagern führen, was in Figur 2 nur für die rechte Gruppe 11 der Walzenabschnitte 12 näher dargestellt ist, aber auch für die linke Gruppe 10 gilt. Die rechte Längsbohrung 15 führt zu einem gleichfalls hohlen Rohrstück 17, das einen seitlichen Anschlussteil 17a aufweist. Hiermit hat es folgende Bewandtnis:

Zum Zwecke eines Bandwechsels ist die Vakuumkammer auf Umgebungsdruck zu fluten, was zur Zeitersparnis durch ein Flutventil grossen Querschnitts geschieht. Selbst wenn diesem Ventil ein Staubfilter zugeordnet ist, so wird doch durch den starken Luftstrom Staub aufgewirbelt, der sich irgendwo abgesetzt hat. Dieser Staub tendiert dazu, auch in die Breitstreckwalzenanordnung einzudringen und deren Lager zu blockieren, so daß häufigere Zerlegungen und Reinigungen der Breitstreckwalzenanordnung notwendig sind. Besonders gefährlich ist die beim Beschichten von Bändern mit Zink auftretende Bildung von Zinkstaub, der mit Sauerstoff Zinkoxid bildet, das sich sowohl in den Lagern als auch in Spalten absetzt.

Dem kann wie folgt durch die Erfindung entgegen gewirkt werden: Vor der Stillstandsphase, d.h. vor dem Beginn der Belüftung und dem öffnen der Vakuumkammer, wird Umgebungsluft 18 über ein Filter 19, eine Schmierstoffquelle 20 (z.B. einen öl-Vernebler) und ein Stell- oder Dosierventil 21 sowie eine Leitung 22 dem Anschlussteil 17a in geringer Menge zugeführt, die gerade für den nächsten Bandbehandlungszyklus ausreicht. Einer dieser Strömungswege für den ölnebel ist in Figur 2 durch die Linie 23 angedeutet. Dabei sind der Druck und die Dosierung so abgestimmt, dass zumindest der grösste Teil des öls in den Wälzlagern zurückbleibt.

Dies hat den zusätzlichen Vorteil, dass die der Breitstreckwalzenanordnung während des Flutens der Kammer zugeführte Luft das Eindringen von Staub und anderen Partikeln in die Breitstreckwalzenanordnung verhindert. Dabei kann auch der Schmierstoffzusatz unterbrochen oder die Schmierstoffquelle umgangen werden.

Aus Figur 2 geht unter Verwendung der bisherigen Bezugszeichen folgendes hervor: Das Kupplungsteil 9 besteht aus einem Ringflansch 9a mit zwei ebenen Seitenflächen 9b und 9c, von denen in Normalenrichtung jeweils ein Gewindestutzen 9d und 9e absteht. Die Seitenflächen 9b und 9c stehen unter dem gleichen spitzen Winkel von beispielsweise 0,8 Grad zueinander wie die Achsen A1 und A2. Auf die Gewindestutzen 9d und 9e sind die rohrförmigen Stützkörper 7 und 8 bis zum Anschlag an die Seitenflächen 9d und 9e aufgeschraubt. Dadurch bildet die Baugruppe aus dem Kupplungsteil 9 und den Stützkörpern 7 und 8 eine lage- und biegefeste Trageinheit für die beiden Gruppen 10 und 11 der Walzenabschnitte 12 und die lineare Ausrichtung der Mantellinien M1 und M2. Das Kupplungsteil 9 besitzt eine Durchgangsbohrung 9f für die Verbindung der Längsbohrungen 14 und 15.

Auf die besagte Baugruppe aus dem Kupplungsteil 9 und den Stützkörpern 7 und 8 ist von beiden Enden her je eine Reihenanordnung von Wälzlagern 24 mit Innenringen 24a und Aussenringen 24b, gelochten Distanzringen 25 kleinen Aussendurchmessers und ungelochten Distanzringen 26 grösseren Aussendurchmessers aufgeschoben und durch Muttern 27 und 28 (Figur 1) gegeneinander verspannt. Auf jeweils zwei Wälzlagern 24 sind die Walzenabschnitte 12 verschiebungsfest gelagert, und zwar jeweils durch radial einwärts gerichtete Innenflansche 12b, die seitlich an den Aussenringen 24b der Wälzlager 24 anliegen. Abgesehen von den Innendurchmessern der Distanzringe 26 sind deren Seitenwände nach aussen hin stufenförmig zurückgesetzt, und der Aussendurchmesser ist kleiner als derjenige der Aussenringe 24b, so dass auf dem Aussenumfang der stillstehenden Distanzinge 26 keine Berührung mit benachbarten rotieren Bauteilen, insbesondere mit den Walzenabschnitten 12 möglich ist.

Die axialen Abmessungen sind dabei so getroffen, dass zwischen den Walzenabschnitten 12 Ringspalte 29 mit Spaltweiten "s" von beispielhaft 0,2 mm gebildet werden, wodurch relative Drehbewegungen zwischen den einzelnen Walzenabschnitten 12 ermöglicht werden. Bezogen auf gegenüber liegende imaginäre Fixpunkte der beiden unmittelbar benachbarten Walzenabschnitte 12 beider Gruppen 10 und 11 im Bereich des Kupplungsteils 9 bewegen sich die besagten Fixpunkte in der Weise, daß die Breite eines Spaltes 30 im Bereich des Kupplungsteils 9 beim Umlauf beispielhaft periodisch zwischen 0,89 mm (in Figur 2 unten) und 1,53 mm (oben) schwankt. Die lineare Ausrichtung der Mantellinien M1 und M2 bleibt beim Umlauf der Walzenabschnitte unverändert. Wichtig ist dabei, dass durch diese brückenartige Bauweise die Umfangsgeschwindigkeit der Walzenabschnitte 12 im Bereich ihrer Mantellinien M1 und M2 auf beiden Seiten des Kupplungsteils 9 identisch ist.

Die Walzenabschnitte 12 beider Gruppen 10 und 11 rotieren im Betrieb durch die Brückenbildung der Baugruppe aus dem Kupplungsteil 9 und den Stützkörpern 7 und 8 absolut mit der gleichen Umfangsgeschwindigkeit, wodurch Schlupf- und Reibungsbewegungen des Bandes auf den kegelförmigen Walzenabschnitten 12 in Umfangsrichtung auf ein Minimum reduziert werden. Diese lokalen Schlupf- und Reibungsbewegungen nehmen mit zunehmender Anzahl der Walzenabschnitte 12 pro Längeneinheit der Breitstreckwalzenanordnung 1 weiter ab.

Durch die Reihenanordnung von Walzenabschnitten 12 und deren Wälzlagern 24 und Distanzringen 25 und 26 wird gegenüber den Stützkörpern 7 und 8 je ein durchgehender Zwischenraum 34 gebildet, der durch die Gaszufuhr frei geblasen und frei gehalten wird.

Figur 3 zeigt verschiedene Möglichkeiten einer Bandführung über die Breitstreckwalzenanordnung nach den Figuren 1 und 2. Gezeigt sind die Basiskreise der einzelnen Walzenabschnitte, deren linear miteinander fluchtende Mantellinien M1 und M2 auf einer gemeinsamen Linie L liegen, die senkrecht zur Zeichenebene verläuft und hier nur durch einen Punkt angedeutet ist. Von dieser geraden Linie L wird das Band 13 in Richtung des Pfeils 31 abgezogen. Der Umschlingungswinkel kann zwischen 0 und 180 Grad variiert werden, um den Grad der Breitenstreckung zu beeinflussen. Wird das Band 13 in Richtung des hierzu parallelen Pfeils 32 zugeführt, so ergibt sich eine maximale Breitenstreckung. Ein Zwischenwert der Breitenstreckung wird bei Zuführung im rechten Winkel, d.h. in Richtung des Pfeils 33 erzielt.

### Bezugszeichenliste:

- 1: Breitstreckwalzenanordnung
- 2: Halterung
- 3: Halterung
- 4: Kammerwand
- 5: Kammerwand
- 6: Schiebeführung
- 7: Stützkörper
- 8: Stützkörper
- 9: Kupplungsteil
- 9a: Ringflansch
- 9b: Seitenfläche
- 9c: Seitenfläche
- 9d: Gewindestutzen
- 9e: Gewindestutzen
- 9f: Durchgangsbohrung
- 10: Gruppe
- 11: Gruppe
- 12: Walzenabschnitte
- 12a: Oberflächen
- 12b: Innenflansche
- 13: Band
- 14: Längsbohrung
- 15: Längsbohrung
- 16: Bohrungen
- 17: Rohrstück
- 17a: Anschlussteil
- 18: Umgebungsluft
- 19: Filter
- 20: Schmierstoffquelle
- 21: Stell- oder Dosierventil
- 22: Leitung
- 23: Linie
- 24: Wälzlager
- 24a: Innenringe
- 24b: Aussenringe
- 25: Distanzringe
- 26: Distanzringe
- 27: Mutter
- 28: Mutter
- 29: Ringspalte
- 30: Spalt
- 31: Pfeil
- 32: Pfeil
- 33: Pfeil
- 34: Zwischenräume

- A1: Achse
- A2: Achse
- E-E: Mittenebene
- L: Abzugslinie
- M1: Mantellinien
- M2: Mantellinien
- "s": Spaltweiten

## Patentansprüche

1. Breitstreckwalzenanordnung für eine faltenfreie Führung von Bändern (13) in geschlossenen Kammern mit zwei ortsfesten Stützkörpern (7, 8), die im Bereich einer Mittenebene (E-E) unter einem stumpfen Winkel aufeinander ausgerichtet sind und mit darauf beiderseits der Mittenebene (E-E) drehbar auf Wälzlagern (24) angeordneten Walzen, die kegelstumpfförmige Oberflächen (12a) mit Mantellinien (M1, M2) aufweisen und die bei ihrer Drehung um die Stützkörper (7, 8) Stellungen durchlaufen, in denen die besagten Mantellinien (M1, M2) miteinander fluchten, **dadurch gekennzeichnet, dass** die Walzen beiderseits der Mittenebene (E-E) aus jeweils mindesten zwei unabhängig voneinander drehbaren Walzenabschnitten (12) bestehen, deren Oberflächen (12a) stufenlos aufeinander ausgerichtet und die über Wälzlager (24) auf den beiden Stützkörpern (7, 8) in Gruppen (10, 11) gelagert sind.

2. Breitstreckwalzenanordnung nach Anspruch 1, **dadurch gekennzeichnet, dass** jede Gruppe (10, 11) von Walzenabschnitten (12) aus mindestens vier Walzenabschnitten (12) besteht.

3. Breitstreckwalzenanordnung nach Anspruch 1, **dadurch gekennzeichnet, dass** die Stützkörper (7, 8) mit Längsbohrungen (14, 15) und radialen Bohrungen (16) versehen sind, durch die ein ölhaltiges Gas zwischen jeweils zwei Wälzlagern (24) einleitbar ist.

4. Breitstreckwalzenanordnung nach Anspruch 1, **dadurch gekennzeichnet, dass** die Stützkörper (7, 8) als Hohlzylinder ausgeführt sind.

5. Breitstreckwalzenanordnung nach Anspruch 1, **dadurch gekennzeichnet, dass** die beiden Stützkörper (7, 8) im Bereich der Mittenebene (E-E) durch ein Kupplungsteil (9) miteinander verbunden sind.

6. Breitstreckwalzenanordnung nach Anspruch 5, **dadurch gekennzeichnet, dass** das Kupplungsteil (9) einen Ringflansch (9a) mit zwei ebenen Seitenflächen (9b, 9c) besitzt, die unter einem spitzen Winkel zueinander stehen und von denen zwei Gewindestutzen (9d, 9e) in Normalenrichtung abstehen, auf die die Stützkörper (7, 8) aufgeschraubt sind.

7. Breitstreckwalzenanordnung nach Anspruch 5, **dadurch gekennzeichnet, dass** das Kupplungsteil (9) eine Durchgangbohrung (9f) für die Verbindung der Längsbohrungen (14, 15) in den Stützkörpern (7, 8) besitzt.

8. Breitstreckwalzenanordnung nach mindestens einem der Ansprüche 1 bis 7, **dadurch gekennzeichnet, dass** die Bohrungen (14, 15, 16) in den Stützkörpern (7, 8) an eine Schmierstoffquelle (20) angeschlossen sind, durch die dem zugeführten Gas ein Schmierstoff beifügbar ist.

9. Breitstreckwalzenanordnung nach Anspruch 1, **dadurch gekennzeichnet, dass** die Oberflächen (12a) der beiderseits der Mittenebene (E-E) angeordneten Gruppen (10, 11) von Walzenabschnitten (12) jeweils in einer gemeinsamen Kegelstumpffläche liegen.

10. Breitstreckwalzenanordnung nach mindestens einem der Ansprüche 1 bis 9, **dadurch gekennzeichnet, dass** die Oberflächen (12a) der einzelnen Walzenabschnitte (12) aus einem Leichtmetall bestehen.

11. Breitstreckwalzenanordnung nach mindestens einem der Ansprüche 1 bis 10, **dadurch gekennzeichnet, dass** die Oberflächen (12a) der einzelnen Walzenabschnitte (12) auf dem Umfang und in Achsrichtung einen Abstand von 0,05 bis 1 mm haben.

12. Breitstreckwalzenanordnung nach mindestens einem der Ansprüche 1 bis 11, **dadurch gekennzeichnet, dass** die Achsen (A1, A2) der Stützkörper (7, 8) unter einem Winkel von 0,1 bis 2 Grad zueinander ausgerichtet sind.

13. Breitstreckwalzenanordnung nach mindestens einem der Ansprüche 1 bis 12, **dadurch gekennzeichnet, dass** die Wälzlager (24) durch Distanzringe (25, 26) in einem vorgegebenen Abstand gehalten sind und dass die Walzenabschnitte (12) durch Innenflansche (12b) zwischen den Aussenringen jeweils zweier Wälzlager (24) auf Distanz gehalten sind.

14. Breitstreckwalzenanordnung nach mindestens einem der Ansprüche 1 bis 13, **dadurch gekennzeichnet, dass** die Breitstreckwalzenanordnung (1) zwischen zwei parallelen Kammerwänden (4, 5) gehalten ist.

15. Breitstreckwalzenanordnung nach mindestens einem der Ansprüche 1 bis 14, **dadurch gekennzeichnet, dass** die Wälzlager (24) Innenringe (24a) und Aussenringe (24b) besitzen und dass ein Gas durch Ringspalte zwischen den Innenringen (24a) und den Aussenringen (24b) hindurchführbar ist.

## Claims

1. Expander roller arrangement for the wrinkle-free guidance guiding of webs (13) in closed chambers with two stationary supporting bodies (7, 8) which are oriented at an obtuse angle with respect to one another in the proximity of a centre plane (E-E) and with rollers, disposed thereon rotatably on roller bearings (24) on both sides of the centre plane (E-E), which have the form of truncated cone surfaces (12a) with shell lines (M1, M2) and which during their rotation about the supporting bodies (7, 8) pass through positions in which said shell lines (M1, M2) are aligned with one another, **characterized in that** the rollers on both sides of the centre plane (E-E) are each comprised of at least two roller sections (12) rotatable independently of one another, the surfaces (12a) of which being aligned steplessly with each other, and which are pivoted via roller bearings (24) on the two supporting bodies (7, 8) in groups (10, 11).

2. The expander roller arrangement as claimed in claim 1, **characterized in that** each group (10, 11) of roller sections (12) is comprised of at least four roller sections (12).

3. The expander roller arrangement as claimed in claim 1, **characterized in that** the supporting bodies (7, 8) are provided with longitudinal bores (14, 15) and radial bores (16) through which an oil-containing gas can be introduced between two roller bearings (24) in each instance.

4. The expander roller arrangement as claimed in claim 1, **characterized in that** the supporting bodies (7, 8) are embodied as hollow cylinders.

5. The expander roller arrangement as claimed in claim 1, **characterized in that** the two supporting bodies (7, 8) are connected with one another through a coupling element (9) in the region of the centre plane (E-E).

6. The expander roller arrangement as claimed in claim 5, **characterized in that** the coupling element (9) includes an annular flange (9a) with two flat side faces (9b, 9c), which form an acute angle with one another and from which project in the direction of the normal two threaded connection fittings (9d, 9e) onto which are screwed the supporting bodies (7,8).

7. The expander roller arrangement as claimed in claim 5, **characterized in that** the coupling element (9) has a throughbore (9f) for the connection of the longitudinal bores (14, 15) in the supporting bodies (7, 8).

8. The expander roller arrangement as claimed in at least one of claims 1 to 7, **characterized in that** the bores (14, 15, 16) in the supporting bodies (7, 8) are connected to a lubricant source (20), through which a lubricant can be added to the supplied gas.

9. The expander roller arrangement as claimed in claim 1, **characterized in that** the surfaces (12a) of the groups (10, 11) of roller sections (12) disposed on both sides of the centre plane (E-E) are each located in a common truncated cone surface.

10. The expander roller arrangement as claimed in at least one of claims 1 to 9, **characterized in that** the surfaces (12a) of the individual roller sections (12) are comprised of a light metal.

11. The expander roller arrangement as claimed in at least one of claims 1 to 10, **characterized in that** the surfaces (12a) of the individual roller sections (12) on the circumference and in the axial direction have a distance of 0.05 to 1 mm.

12. The expander roller arrangement as claimed in at least one of claims 1 to 11, **characterized in that** the axes (A1, A2) of the supporting bodies (7, 8) are oriented with respect to one another at an angle of 0.1 to 2 degrees.

13. The expander roller arrangement as claimed in at least one of claims 1 to 12, **characterized in that** the roller bearings (24) are retained at a specified spacing by spacer rings (25, 26) and that the roller sections (12) are retained at a spacing by inner flanges (12b) between the outer races of two roller bearings (24) each.

14. The expander roller arrangement as claimed in at least one of claims 1 to 13, **characterized in that** the expander roller arrangement (1) is retained between two parallel chamber walls (4, 5).

15. The expander roller arrangement as claimed in at least one of claims 1 to 14, **characterized in that** the roller bearings (24) include inner races (24a) and outer races (24b) and that a gas can be introduced through annular gaps between the inner races (24a) and the outer races (24b).

## Revendications

1. Aménagement de rouleaux élargisseurs pour un guidage de bandes (13) sans plis dans des chambres fermées comportant deux éléments de support (7, 8) fixes qui sont orientés l'un par rapport à l'autre selon un angle obtus dans la zone d'un plan médian (E-E) avec de chaque côté du plan médian (E-E) des rouleaux agencés sur des paliers à roulement (24) de façon à pouvoir pivoter, lesquels rouleaux présentent des surfaces (12a) en forme de cônes tronqués avec des génératrices (M1, M2) et qui, par leur rotation autour des éléments de support (7, 8) passent par des positions dans lesquelles lesdites génératrices (M1, M2) s'alignent entre elles, **caractérisé en ce que** les rouleaux de chaque côté du plan médian (E-E) se composent d'au moins deux segments de rouleau (12) pouvant pivoter indépendamment l'un de l'autre, les surfaces (12a) de ces derniers étant alignées en continu l'une par rapport à l'autre et **en ce que** les rouleaux sont montés en groupes (10, 11) sur les deux éléments de support (7,8) par le biais des paliers à roulement (24).

2. Aménagement de rouleaux élargisseurs selon la revendication 1, **caractérisé en ce que** chaque groupe (10,11) de segments de rouleau (12) se compose d'au moins quatre segments de rouleau (12).

3. Aménagement de rouleaux élargisseurs selon la revendication 1, **caractérisé en ce que** les éléments de support (7, 8) sont pourvus d'alésages longitudinaux (14, 15) et d'alésages radiaux (16), à travers lesquels on peut introduire un gaz oléagineux entre deux paliers à roulement (24).

4. Aménagement de rouleaux élargisseurs selon la revendication 1, **caractérisé en ce que** les éléments de support (7, 8) sont réalisés sous la forme de cylindres creux.

5. Aménagement de rouleaux élargisseurs selon la revendication 1, **caractérisé en ce que** les deux éléments de support (7, 8) sont reliés entre eux dans la zone du plan médian (E-E) par un élément de couplage (9).

6. Aménagement de rouleaux élargisseurs selon la revendication 5, **caractérisé en ce que** l'élément de couplage (9) possède une bride annulaire (9a) avec deux surfaces latérales planes (9b, 9c) qui sont reliées entre elles selon un angle aigu, deux embouts filetés (9d, 9e) faisant saillie dans la direction normale, embouts sur lesquels les éléments de support (7, 8) sont vissés.

7. Aménagement de rouleaux élargisseurs selon la revendication 5, **caractérisé en ce que** l'élément de couplage (9) possède un alésage traversant (9f) pour le raccordement des alésages longitudinaux (14, 15) dans les éléments de support (7, 8).

8. Aménagement de rouleaux élargisseurs selon au moins une des revendications 1 à 7, **caractérisé en ce que** les alésages (14, 15, 16) dans les éléments de support (7, 8) sont raccordés à une source de lubrifiant (20) par laquelle un lubrifiant peut être ajouté au gaz introduit.

9. Aménagement de rouleaux élargisseurs selon la revendication 1, **caractérisé en ce que** les surfaces (12a) des groupes (10,11) de segments de rouleau (12) agencés de chaque côté du plan médian (E-E) reposent contre une surface conique tronquée commune.

10. Aménagement de rouleaux élargisseurs selon au moins une des revendications 1 à 9, **caractérisé en ce que** les surfaces (12a) des différents segments de rouleau (12) se composent d'un métal léger.

11. Aménagement de rouleaux élargisseurs selon au moins une des revendications 1 à 10, **caractérisé en ce que** les surfaces (12a) des différents segments de rouleau (12) présentent sur le pourtour et dans le sens de l'axe une distance comprise entre 0,05 et 1 mm.

12. Aménagement de rouleaux élargisseurs selon au moins une des revendications 1 à 11, **caractérisé en ce que** les axes (A1, A2) des éléments de support (7, 8) sont orientés l'un vers l'autre selon un angle allant de 0,1 à 2 degrés.

13. Aménagement de rouleaux élargisseurs selon au moins une des revendications 1 à 12, **caractérisé en ce que** les paliers à roulement (24) sont maintenus à une distance prédéterminée par des bagues d'écartement (25, 26) et **en ce que** les segments de rouleau (12) sont maintenus à distance par une bride intérieure (12b) entre les bagues extérieures de deux paliers à roulement (24).

14. Aménagement de rouleaux élargisseurs selon au moins une des revendications 1 à 13, **caractérisé en ce que** l'aménagement de rouleaux élargisseurs (1) est tenu entre deux parois de chambre (4, 5) parallèles.

15. Aménagement de rouleaux élargisseurs selon au moins une des revendications 1 à 14, **caractérisé en ce que** les paliers à roulement (24) présentent des bagues intérieures (24a) et des bagues extérieures (24b) et **en ce qu'**un gaz peut être introduit par des fentes annulaires entre les bagues intérieures (24a) et les bagues extérieures (24b).
